Europäisches Patentamt

European Patent Office

Office européen des brevets

(11) Publication number: **0 464 202 A1**

# EUROPEAN PATENT APPLICATION
## published in accordance with Art. 158(3) EPC

(21) Application number: 90902376.4

(22) Date of filing: 25.01.90

(86) International application number:
PCT/JP90/00088

(87) International publication number:
WO 91/11319 (08.08.91 91/18)

(51) Int. Cl.5: **B29D 22/00**, B29D 31/00,
B29C 67/14, F16J 10/00,
F16J 12/00, F17C 1/06,
F17C 1/16, //B29K105/08

(43) Date of publication of application:
08.01.92 Bulletin 92/02

(84) Designated Contracting States:
DE FR GB IT NL SE

(71) Applicant: HITACHI CONSTRUCTION
MACHINERY CO., LTD.
6-2, Ohtemachi 2-chome
Chiyoda-ku Tokyo 100(JP)

Applicant: ARISAWA MFG. CO., LTD.
5-5, Minamihoncho 1-chome
Jouetsu-shi, Niigata 943(JP)

(72) Inventor: HASHIMOTO, Hisayoshi
3613-59, Kashiwada-machi
Ushiku-shi, Ibaraki 300-12(JP)
Inventor: TAMURA, Morio
2678-8, Kandatsu-machi
Tsuchiura-shi, Ibaraki 300(JP)

(74) Representative: Smulders, Theodorus A.H.J.,
Ir. et al
Vereenigde Octrooibureaux Nieuwe Parklaan
107
NL-2587 BP 's-Gravenhage(NL)

(54) PRESSURE VESSEL MADE OF COMPOSITE MATERIAL.

(57) A pressure vessel made of a composite material according to the present invention is constituted of an inner tube (2) formed of a fiber-reinforced resin material, a rigid attaching member (10 or 30) which is fit into at least one of the two axial ends (4 and 5) of the inner tube (2) and is provided with at least one protrusion (20 or 42) made of a fibrous material, and an outer tube (3) formed by winding a resin-impregnated fibrous material (50) around the peripheries of both the inner tube and the attaching member while reversing the direction of winding of the fibrous material by hooking it on said protrusion. Each of the sections where the attaching member (10 or 30) is fit into the axial end (4 or 5) of the inner tube (2) is designed to involve at least one pair of mutually abutting faces (7 and 22; 8 and 23; or 9 and 36), and the diameter of the periphery of an area ranging from the abutting face (23 or 36) of the attaching member (10 or 30) to at least a section provided with the protrusion (20 or 42) is adjusted to be nearly equal to the outer diameter of the inner tube (2).

# FIG. I

TECHNICAL FIELD

The present invention relates to a pressure vessel made of a composite material, and particularly to a pressure vessel made of a composite material including a fiber-reinforced resin material, which vessel is suitable for cylinder tubes such as hydraulic cylinders, pneumatic cylinders and the like, and bombs such as vessels for liquefied gas and compressed gas and the like.

BACKGROUND ART

The development of members made of composite materials comprising fiber-reinforced resin materials is investigated in various fields from the viewpoints of their light weight and high strength. An example of such members is a pressure vessel made of a composite material which is used in the cylinder tube of a hydraulic cylinder, a pneumatic cylinder or the like. An example of conventional pressure vessels made of composite materials is disclosed in JP, A, 63-166522 in which a cylinder tube is formed by winding a strand of continuous filaments impregnated with a fiber-reinforced resin.

More specifically, the pressure vessel made of a composite material disclosed in JP, A, 63-166522 is provided with an inner cylinder made of a fiber-reinforced resin material, a cylindrical rigid mount member fitted to at least one of the opposite axial ends of the inner cylinder and having a plurality of radial pins planted on the mount member, and an outer cylinder formed by winding a strand of continuous filaments impregnated with a resin over the region from the outer peripheral surface of the inner cylinder to the outer peripheral surface of the mount member and returning the strand while guiding it by the radial pins. In this pressure vessel, the mount member is strongly combined with the inner cylinder by curing the resin impregnated into the strand of continuous filaments to form a cylinder tube.

However, the prior art has the following problems:

In the prior art, the peripheral surface of the mount member has a shape having a tapered portion which is inclined toward the central portion of the inner cylinder in the axial direction thereof, and the outer peripheral surface including the tapered portion is covered with the outer cylinder over the whole length thereof. When tensile force acts on the cylinder tube in the axial direction thereof due to the internal pressure, therefore, the tensile force acts as the force of separating the outer cylinder from the inclined surface of the tapered portion of the mount member. The repeated application of internal pressure to the cylinder tube causes the separation of the inner peripheral surface of the outer cylinder from the inclined surface of the mount member and the outer peripheral surface of the inner cylinder in the vicinity of the boundary between the inner cylinder and the mount member. The further repeated application of internal pressure causes the progress to separation throughout the outer cylinder, leading to fracture of the tube.

Other examples of prior art related to a member made of a composite material which is formed by winding a strand of continuous filaments impregnated with a resin are disclosed in JP, A, 63-166519 and 63-249628.

It is an object of the present invention to provide a pressure vessel made of a composite material which does not easily produce the separation of an outer cylinder and which has a high life and high reliability.

DISCLOSURE OF THE INVENTION

In order to achieve the object, the present invention provides a pressure vessel made of a composite material comprising an inner cylinder made of a fiber-reinforced resin material, a rigid mount member fitted to at least one of the opposite axial ends of the inner cylinder and provided with at least one protrusion, and an outer cylinder formed by winding a fibrous material impregnated with a resin over a range from the outer peripheral surface of the inner cylinder to the outer peripheral surface of the mount member, and returning the fibrous material while guiding it by using the protrusion, wherein each of the fitted portions of the axial end of the inner cylinder and the mount member has a shape having at least one end face abutting against one another, and a portion of the outer peripheral surface of the mount member which ranges from the abutting end face at least to a portion where the protrusion is placed has substantially the same diameter as that of the outer peripheral surface of the inner cylinder.

In a preferred embodiment, sealing means is disposed radially inward of the axial end of the inner cylinder for preventing an internal pressure of the pressure vessel from acting on the abutting end faces and a portion of the inner cylinder adjacent to the abutting end faces.

The sealing means preferably comprises an elastic sealing element arranged to elastically contact with the inner peripheral surface of the inner cylinder at a position axially inward of the abutting end faces of the axial end and the mount member, and a rigid body for supporting the elastic sealing element.

The mount member may be formed in a cylindrical shape having an inner peripheral surface having substantially the same diameter as that of the inner peripheral surface of the inner cylinder and is provided with a port for supplying or discharging a working fluid. In this case, the sealing means preferably comprises first and second elastic sealing elements arranged to elastically contact with the inner peripheral surface of the inner cylinder and the inner peripheral surface of the mount member, respectively, at positions on both sides to interpose the abutting end faces, and a rigid body supporting the first and second elastic sealing elements and provided with a working fluid passage which communicates with the port of the mount member. The axial end of the inner cylinder preferably has a stepped shape having two abutting end faces at different axial positions. The first elastic sealing element of the sealing means which contacts with the inner peripheral surface of the inner cylinder is supported by the rigid body at a position axially inward of the axially inner one of the two abutting end faces.

The mount member has a cover-like shape which closes the axial end of the inner cylinder and provided with a port for supplying or discharging a working fluid. In this case, the sealing means preferably comprises an elastic sealing element arranged to elastically contact with the inner peripheral surface of the inner cylinder at a position axially inward of the abutting end faces, and a rigid body comprising a part of the mount member for supporting the elastic sealing element.

In a preferred embodiment, a reinforcing layer formed by circumferentially winding a fibrous material impregnated with a resin is provided on a portion of the outer peripheral surface of the outer cylinder where the protrusion is placed.

In another preferred embodiment, a sensor is disposed between the inner cylinder and the outer cylinder for detecting the stroke of a piston which axially moves in the inner cylinder.

In a further preferred embodiment, the mount member has a circumferential recess formed in the periphery thereof at a position axially outward of the protrusion for containing the fibrous material guided by the protrusion.

In still a further preferred embodiment, a protective layer made of an elastic material is provided on the outside of the outer cylinder.

BRIEF DESCRIPTION OF THE DRAWINGS

Fig. 1 is a sectional view of the cylinder tube of a hydraulic cylinder in accordance with an embodiment of the present invention;
Fig. 2 is an enlarged view of the rod cover side of a cylinder tube;
Fig. 3 is an enlarged view of the bottom cover side of a cylinder tube;
Fig. 4 is a view for explaining the process for forming an outer cylinder on the rod cover side of a cylinder tube;
Fig. 5 is a view for explaining the process for forming an outer cylinder on the bottom side of a cylinder tube;
Fig. 6 is an enlarged view of a portion near pins provided on the rod cover of a cylinder tube;
Fig. 7 is a sectional view of the rod cover side of a cylinder tube in accordance with another embodiment of the present invention;
Fig. 8 is a sectional view of the rod cover side of a cylinder tube in accordance with still another embodiment of the present invention;
Fig. 9 is a sectional view of the rod cover side of a cylinder tube in accordance with a further embodiment of the present invention;
Fig. 10 is a sectional view of a cylinder tube in accordance with still a further embodiment of the present invention; and
Fig. 11 is a sectional view of a principal portion of a cylinder tube in accordance with a further embodiment of the present invention.

BEST MODE FOR CARRYING OUT THE INVENTION

An embodiment of the present invention in which the present invention is applied to the cylinder tube of a hydraulic cylinder is described below with reference to the drawings.

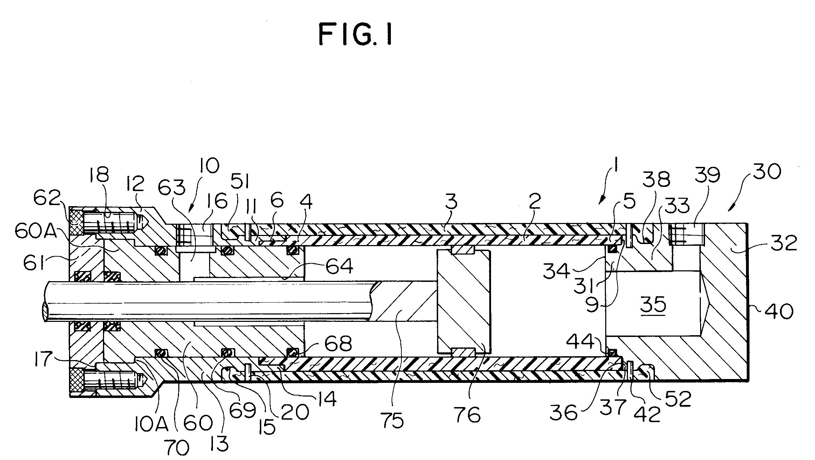

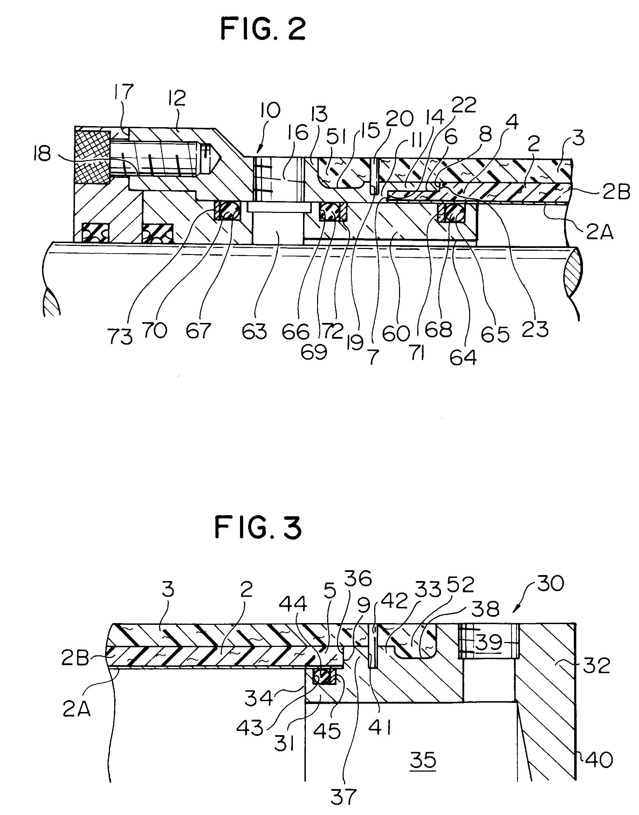

In Fig. 1, a cylinder tube 1 of this embodiment has an inner cylinder 2 made of a fiber-reinforced resin material. The inner cylinder 2 has an elongated cylindrical shape comprising a base layer 2A made of paper or nonwoven fabric of a fibrous material impregnated with a resin and at least one wound layer 2B formed by cross-winding under tension a fibrous material consisting of a strand of continuous filaments impregnated with a resin at a constant winding angle close to $90°$, for example, about 40 to $89°$ with respect to the axis, by a filament winding method or the like until a predetermined thickness is obtained in the same way as the outer cylinder 3 described below. As can been seen from Fig. 2, one 4 of the opposite axial ends 4, 5 of the inner cylinder 2 has a circumferential cut portion 6 which is formed in the outer peripheral surface thereof by machining by means of lathe or the like so as to have a stepped shape having two end faces 7 and 8 at different positions in the axial direction. As can be seen from Fig.3, the other axial end 5 of the inner cylinder 2 is cut by machining by means of lathe or the like so that a single end face 9 is formed.

A mount member 10 is fitted to the axial end 4 of the inner cylinder 2. The mount member 10 is made of a rigid material including ferrous metal material such as stainless steel or the like, a non-ferrous metal material such as aluminum or the like, a ceramic material or the like, which has a cylindrical shape having an inner peripheral surface of substantially the same diameter as that of the inner peripheral surface of the inner cylinder 2, and which also serves as a rod cover for the cylinder tube. The mount member 10 comprises a first small-diameter portion 11 near the inner cylinder 2, a second large-diameter portion 12 far from the inner cylinder 2 and a third intermediate-diameter third portion 13 between the first and second portions.

The first portion 11 has an axial end 14 having a shape complementary with the stepped shape of the axial end 4 of the inner cylinder 2 and having a cylindrical outer peripheral surface with substantially the same diameter as that of the outer peripheral surface of the inner cylinder 2. The axial end 14 is engaged with the axial end 4 of the inner cylinder 2 in such a manner that the end faces 22, 23 of the axial end 14 abut against the corresponding end faces 7, 8 of the axial end 4 of the inner cylinder 2, respectively. The engaging surfaces including the end faces 7, 8 and 22, 23 of the axial ends 4, 14 are securely joined with each other by an adhesive. The first portion 11 is provided with a circumferential recess 15 in the outer peripheral surface thereof on the side adjacent to the third portion 13. The recess 15 provides a fiber well for receiving strands of continuous filaments returned when the outer cylinder 3 is formed as described below.

The third portion 13 has an outer peripheral surface having a diameter greater than that of the outer peripheral surface of the axial end 14 of the first portion 11, as well as having a radial port 16 opened in the outer peripheral surface thereof for supplying or discharging a working fluid. The second portion 12 has an outer peripheral surface having a diameter greater than that of the outer peripheral surface of the third portion 13, and also has an end face 17 in which a plurality of axial bolt holes 18 are formed. This structure of the third portion 13 having the port 16 and the second portion 12 having the end face 17 and the bolt holes 18 allows the mount member 10 to serve as a rod cover.

In addition, a plurality of radial small holes 19 are formed at substantially equal intervals in the circumferential direction in a portion of the outer peripheral surface of the axial end 14 adjacent to the recess 15. Pins 20 are respectively planted in the small holes 19 and strongly fixed thereto by using an adhesive. Each of the pins 20, for example, comprises a high-strength member made of a metallic material, the tip portion thereof projecting by a predetermined dimension from the outer peripheral surface of the axial end 14. The projecting portion of each of the pins 20 provides a protrusion for guiding and returning a strand of continuous filaments when the outer cylinder is formed as described below.

A second mount member 30 is fitted to the other axial end 5 of the inner cylinder 2. The member 30 is made of a rigid material including a ferrous metal material such as stainless steel or the like, a non-ferrous metal material such as aluminum or the like, a ceramic material and the like in the same way as the mount member 10 and also serves as a bottom cover for the cylinder tube. The mount member 30 comprises a first small-diameter portion 31 near the inner cylinder 2, a second large-diameter portion 32 far from the inner cylinder 2 and a third intermediate-diameter portion 33 between the first and second portions.

The first portion 31 is formed in a shape having a cylindrical outer peripheral surface having substantially the same diameter as that of the inner peripheral surface of the axial end 5 of the inner cylinder 2 and is engaged with the inner peripheral surface, as well as having an end face 34 positioned inside the inner cylinder 2. In the end face 34 is opened a hole 35 which extends to an intermediate position of the second portion 32 in the axial direction thereof.

The third portion 33 has a cylindrical portion 37 having an outer peripheral surface having substantially the same diameter as that of the outer peripheral surface of the inner cylinder 2, as well as an annular end face 36 positioned between that outer peripheral surface and the outer peripheral surface of the first portion 31. The end face 36 of the cylindrical portion 37 abuts against the end face 9 of the inner cylinder 2. The end face 9 of the inner cylinder 2 is securely joined to the end face 36 of the cylindrical portion 37 by using an adhesive. The third portion 33 also has a circumferential recess 38 in a portion of the outer peripheral surface adjacent to the second portion 32. The recess 38 is provided for the same purpose as that of the recess 15.

The second portion 32 has an outer peripheral surface having a diameter greater than that of the outer peripheral surface of the cylindrical portion 37 of the third portion 33, as well as having a radial port 39 opened in the outer peripheral surface thereof and communicating with the hole 35 for supplying or discharging a working fluid. The second portion 32 also has a closed end face 40. The structure of the second portion 33 having the port 39 and the closed end face 40 allows the mount member 30 to serve as a bottom cover.

The third portion 33 also has a plurality of radial small holes 41 which are formed in a portion of the outer peripheral surface of the cylindrical portion 37 adjacent to the recess 38, like the small holes 19 of the mount member 10. A plurality of pins 42 are respectively planted in the small holes 41 and fixed thereto by an adhesive like the pins 20. The projecting portion of each of the pins 42 has the same function as that of the projecting portion of each of the pins 20.

In the outer peripheral surface of the first portion 31 is formed an annular groove 43 in which an elastic sealing element, i.e., an O-ring 44, is fitted together with a backup ring 45. The O-ring 44 elastically contacts with the inner peripheral surface of the inner cylinder 2 at a position axially inward of the abutting end faces 9, 36 and is supported by the rigid first portion 31. The O-ring 44 has the function of sealing between the inner peripheral surface of the inner cylinder 2 and the outer peripheral surface of the first portion 31 of the mount member 30 for preventing the pressure of the working fluid introduced into the cylinder tube, i.e., the internal pressure, from acting on the abutting end faces 9, 36 and the portion of the inner cylinder adjacent to the abutting end faces 9, 36. The backup ring 45 comprises a thin plate ring and has the function of preventing the O-ring 44 from springing out of the annular groove 43 when the first portion 31 is inserted into the inner cylinder 2.

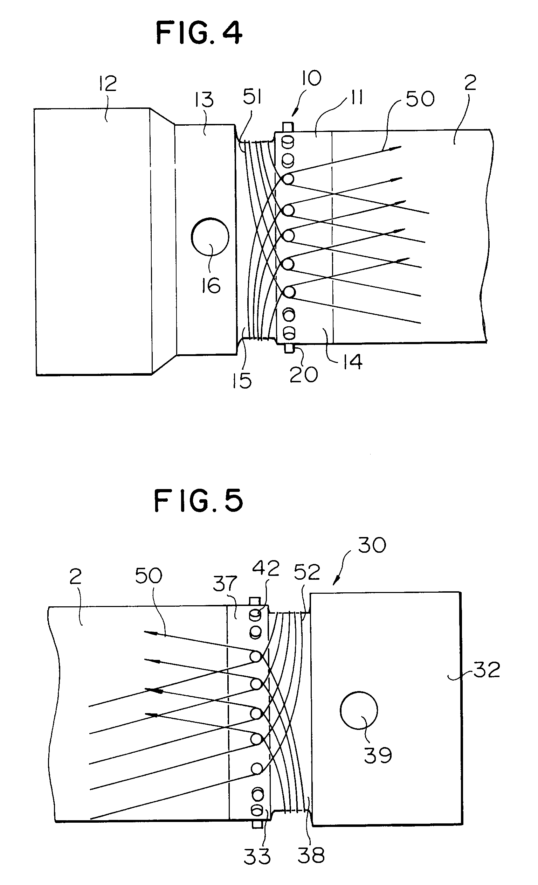

The outer cylinder 3 is formed on the outer peripheral surface of the inner cylinder 2 by winding a fibrous material 50 (refer to Figs. 4 and 5) consisting of a strand of continuous filaments impregnated with a resin over the region from the outer peripheral surface of the inner cylinder 2 to the outer peripheral surface of the first portion 11 of the mount member 10 and the outer peripheral surface of the third portion 33 of the mount member 30. The outer cylinder 3 is formed into a cylindrical shape having at least one wound layer which is formed by cross-winding the fibrous material 50 under tension at a constant winding angle close to $0°$, for example about 5 to $60°$ with respect to the axis, by a filament winding method or the like until a predetermined thickness is obtained. During the cross winding, the fibrous material 50 is changed in its direction while being guided by the projecting portions of the pins 20 or 42, as shown in Figs. 4 and 5, and then wound in the recess 15 or 38 for a predetermined angle, for example, $180°$, to form returning portions 51, 52. The fibrous material 50 is then changed in its direction while being guided by the pins 20 or 42 and returned to the outer peripheral surface of the inner cylinder 2 so that the mount members 10, 30 are securely combined with the axial ends 4, 5, respectively, of the inner cylinder 2.

Examples of the fibrous material 50 that may be used include carbon fiber, glass fibers, aramid fibers, alumina fibers, silicon carbide fibers and the like. Examples of the resins impregnated into the fibrous material 50 include epoxy resins, polyester resins, polyimide resins and the like, all of which have thermosetting properties and adhesion. Examples of materials for the inner cylinder include the same as those described above.

A rigid body 60 is inserted into the axial end 4 of the inner cylinder 2 and the mount member 10, the rigid body 60 being formed into a cylindrical shape by using a rigid material including a ferrous metal material such as stainless steel or the like, a non-ferrous metal material such as aluminum or the like, and a ceramic material in the same way as the mount member 10. A rod cover 61 and the end 17 of the second portion 12 of the mount member 10 are clamped together by using bolts 62 which are screwed into the bolt holes 18 so that the rigid body 60 is held at a predetermined position.

The rigid body 60 has a radial passage 63 and an axial passage 64 for a working fluid which communicate with the port 16 of the mount member 10. The outer peripheral surface of the rigid body 60 are formed with three annular grooves 65, 66, 67 in which elastic sealing elements, i.e., O-rings 68, 69, 70, are respectively fitted together with backup rings 71, 72, 73. The O-ring 68 elastically contacts with the inner peripheral surface of the inner cylinder 2 at a position axially inward of the axially inner one 8, 23 of the two pairs of abutting end faces 7, 22 and 8, 34 of the inner cylinder 2 and the mount member 10. The O-ring 69 elastically contacts with the inner peripheral surface of the mount member 10 at a position axially outward of the axially outer abutting end faces 7, 22 and axially inward of the radial passage 63. Namely, the O-rings 68, 69 respectively elastically contact with the inner peripheral surface of the inner cylinder 2 and the inner peripheral surface of the mount member 10 at positions on both sides to interpose the two pairs of abutting end faces 7, 22 and 8, 23. The O-ring 70 elastically contacts with the inner peripheral surface of the mount member 10 at a position axially outward of the radial passage 63. The O-rings 68, 69, 70 are supported by the rigid body 60.

The O-ring 68 has the function of sealing between the inner peripheral surface of the inner cylinder 2 and the outer peripheral surface of the rigid body 60 for preventing the internal pressure of the cylinder tube from acting from the side of the inner cylinder 2 on the two pairs of abutting end faces 7, 22 and 8, 23 and a portion of the inner cylinder 2 adjacent to the abutting end faces. The O-ring 69 has the function of sealing between the inner peripheral surface of the mount member 10 and the outer peripheral surface of the rigid body 60 for preventing the internal pressure of the cylinder tube from acting from the side of the radial passage 63 on the two pairs of abutting end faces 7, 22 and 8, 23 and a portion of the inner cylinder 2 adjacent to the abutting end faces. The O-ring 70 has the function of sealing between the inner peripheral surface of the mount member 10 and the outer peripheral surface of the rigid body 60 for preventing the internal pressure of the cylinder tube from leaking from the side of the radial passage 63.

Each of the backup rings 71, 72, 73 comprises a thin plate ring like the backup ring 45 and has the same function as that of the backup ring 45.

As shown in the drawings, a piston rod 75 is movably inserted into the central portions of the rigid body 60 and the rod cover 61 in a liquid-tight manner, a piston 76 which reciprocates in the inner cylinder 2 being mounted at the end of the piston rod 75.

A description will now be given of the method of producing the cylinder tube 1 configured as described above.

A mandrel having an external diameter corresponding to the internal diameter of the cylinder tube 1 and an outer peripheral surface finished with a predetermined level of surface accuracy is first prepared. In order to form the base layer 2A of the inner cylinder 2, a paper of a fibrous material or nonwoven fabric is impregnated with a resin and carefully wound on the outer peripheral surface of the mandrel. The mandrel is then placed in a thermosetting furnace (not shown) in which the resin impregnated into the paper or nonwoven fabric is thermoset to form the base layer 2A. The thermosetting may be effected at the same time as thermosetting of the layer 2B described below. The fibrous material paper or nonwoven fabric used has carbon short fibers which have a length of, for example, about 30 mm or less, and which are randomly arranged, and a resin having high elongation is used as the resin impregnated. This method is described in detail in JP, A, 62-288703. The use of the paper or nonwoven fabric impregnated with a resin improve in wear resistance of the base layer 2A and allows the fibers to be wound in a state where they lie down along the outer peripheral surface of the mandrel without projecting in the radial direction. It is therefore possible to significantly improve the sliding property on the piston which makes a reciprocating motion in the inner cylinder 2 and to prevent a damage to the piston 76. In addition, the use of the resin having high elongation causes an improvement in airtight strength when the internal pressure increases during use.

A fibrous material consisting of a strand of continuous filaments impregnated with a resin is then cross-wound on the outer peripheral surface of the base layer 2A under tension at a constant winding angle by using a filament winding method until a predetermined thickness is obtained. During this winding, one of the above-described materials, for example, carbon fibers, is used as the fibrous material, and one of the above-described resins, for example, epoxy resin, is used as the resin. The winding angle of the fibrous material is preferably close to 90°, for example, about 40 to 85° with respect to the axis, and more preferably about 70°. This causes the inner tube 2 to bear the hoop force generated in the tube and thus increases resistance to the internal pressure. The mandrel with the fibrous material wound on the base layer 2A is then placed in a thermosetting furnace (not shown) so that the resin impregnated into the fibrous material is thermoset to form the layer 2B.

After the mandrel has been withdrawn, the cylinder formed is cut into a predetermined length and shaped by machining such as lathe or the like. Namely, the cur portion 6 is provided at the axial end 4 so as to provide a stepped shape including the end faces 7, 8, and the single end face 9 is provided at the axial end 5. The outer peripheral surface is appropriately ground so as to have a predetermined diameter, and the ground surface is roughly processed so that the adhesive to the outer cylinder 3 is enhanced. The inner cylinder 2 may be further appropriately treated for removing thermal strain

The mount members 10, 30 each having a predetermined shape are prepared, and the pins 20, 42 are respectively planted in the small holes 19, 41 of the mount members 10, 30 by an adhesive. The pins 20, 40 may be planted by press fitting. The O-ring 44 is fitted together with the backup ring 45 in the annular groove 43 in the first portion 31 of the mount member 30. The mount members 10, 30 provided with the pins 20, 40 and the O-ring 44 are respectively fitted to the axial ends 4, 5 of the inner cylinder 2, as shown in Fig. 1. The engaging surfaces are joined to each other by an adhesive.

After the adhesive has been hardened, the fibrous material 50 consisting of a strand of continuous filaments impregnated with a resin is wound over the range from the outer peripheral surface of the inner cylinder 2 to the outer peripheral surfaces of the mount members 10, 30 at a predetermined winding angle by a filament winding method while guiding the material 50 by using the pins 20, 42 to form the outer cylinder 3. During this winding, one of the above-described materials, for example, carbon fibers, is used as the fibrous material 50, and one of the above-described materials, for example, epoxy resin, is used as the resin. The winding angle of the fibrous material 50 is preferably close to 0°, for example, about 5 to 30° with respect to the axis. This causes the outer cylinder 3 to bear bending force and tensile force and thus increases bending strength and tensile strength of the cylinder tube 1.

During the winding of the fibrous material 50, as shown in Fig. 4, at the axial end 4 of the inner cylinder 2, the fibrous material 50 is stretched under predetermined tension from the outer peripheral surface of the inner cylinder 2 to the outer peripheral surface of the first portion 11 of the mount member 10, changed in its direction while being guided by the pins 20 and wound for a predetermined angle, for example, 180°, on the recess 15 to form returning portion 51. The fibrous material 50 is then changed in its direction while being guided by the pins 20 and then returned to the outer peripheral surface of the inner cylinder 2. As shown in Fig. 5, at the axial end 5 of the inner cylinder 2, the fibrous material 50 is wound and returned by using the pins 42 and the recess 38 provided in the mount member 30 in the same way as that described above.

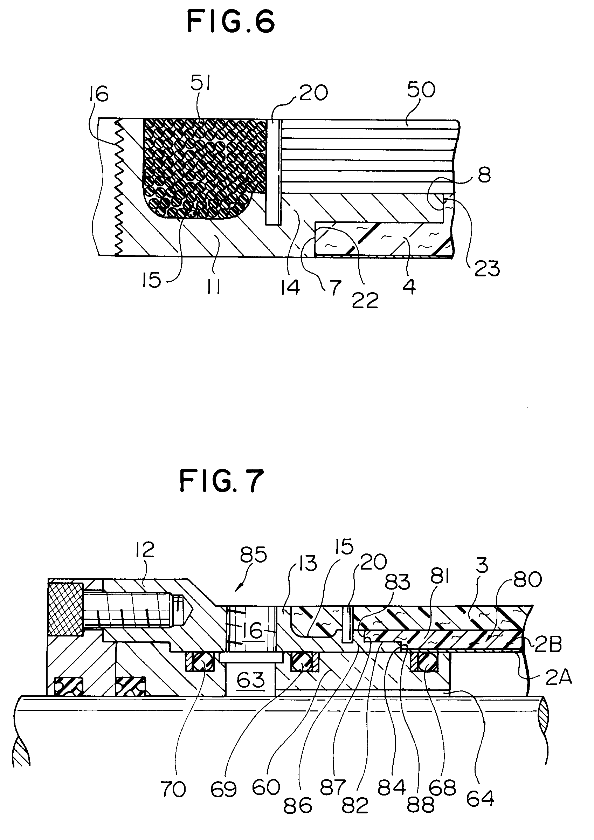

This method of winding and returning the fibrous material 50 by using the pins 20, 42 enables the mount members 10, 30 to be securely combined with the axial ends 4, 5 of the inner cylinder 2, respectively. In addition, the provision of the recesses 15, 38 permits the returning portions 51, 52 of the fibrous material 50 to be smoothly contained in the recesses, as shown in Fig. 6, thereby reducing the bulge of the returning portions 51, 52. Further, because the fibrous material 50 can be wound for a predetermined angle on the recesses 15, 38, the mount members 10, 30 can be stably and strongly combined with the axial ends 4, 5, respectively, as compared with a case where the fibrous material 50 is wound by using the pins 20, 42 only, whereby the strength of the cylinder tube can be improved.

In addition, since the outer peripheral surface of each of the mount members 10, 30 on which the fibrous material 50 is wound has a cylindrical surface having the same diameter as that of the outer peripheral surface of the inner cylinder 2, when the internal pressure produces axial tensile force acting on the cylinder tube, the tensile force does not act as the force of separating the fibrous material 50 from the outer peripheral surface of the mount members 10, 30, thereby preventing the outer cylinder 3 from separating from the inner cylinder 2. In addition, since the fibrous material 50 is smoothly changed in its direction in the vicinities of the pins 20, 42, the concentration of stress acting on the fibrous material and the load on the pins are relieved. Further, because the fibrous material 50 can be engaged with the root of each of the pins 20, 42, a sufficient amount of fibrous material 50 can be held by the pins 20, 42, and bending of each pin can be also minimized. As a result, the strength of the cylinder tube can be further improved.

After the outer cylinder 3 having a predetermined thickness has been formed on the outer peripheral surface of the inner cylinder 2 and the outer peripheral surfaces of the mount members 10, 30, the resultant product is placed in a thermosetting furnace (not shown) for thermosetting the resin with which the fibrous material 50 is impregnated. If required, the outer peripheral surface of the outer cylinder 3 is then subjected to machining such as grinding or the like in order to smooth the outer peripheral surface of the outer cylinder 3 and finish it into predetermined dimensions. In this way, the body of the cylinder tube 1 is completed.

The rigid body 60 having a predetermined shape is then prepared. The piston rod 75 provided with the piston 76 is inserted into the annular body 60, and the O-rings 68, 69, 70 are fitted in the annular grooves 65, 66, 67 of the rigid body 60 together with the backup rings 71, 72, 73. The rigid body 60 with the piston 76 is then inserted into the cylinder tube through the opening of the mount member 10 of the cylinder body until the large-diameter portion 60A of the rigid body 60 engages with the stepped portion 10A in the inner peripheral surface of the mount member 10. The rod cover 61 is then fitted to the end face 17 of the mount member 10 and fixed thereto by using the bolts 62. In this way, the cylinder tube 1 of this embodiment is completed.

In this embodiment, therefore, since the fibrous material 50 consisting of a strand of continuous filaments impregnated with a resin is returned while being guided by the pins 20, 42 when the fibrous material 50 is wound to form the outer cylinder 3, the fibrous material 50 can be regularly and smoothly wound, and the strength possessed by the fibrous material 50 can be sufficiently utilized. It is therefore possible to strongly combine the inner cylinder 2 with the mount members 10, 30 and securely prevent rotation.

In addition, since the outer cylinder 3 need not be subjected to cutting such as drilling, recessing or the like and thus the fibrous material is not cut at an intermediate position, it is possible to make full use of the strength possessed by the fibrous material 50 and significantly increase the fatigue resistance and the impact resistance.

Further, the winding angles of the fibrous material 50 in the inner cylinder 2 and the outer cylinder 3 are different from each other so that the inner cylinder 2 bears hoop force and the outer cylinder 3 bears bending force and tensile force, it is possible to increase the pressure resistance and the flexural strength and to thin the wall of the whole of the cylinder tube.

Because the inner cylinder 2 and the outer cylinder 3 and the mount members 10, 30 are made as separate members, a high-rigidity material such as carbon steel or the like can be used for the mount members 10, 30 which are machined for forming the ports 16, 39, the bolt holes 18 and so on, and therefore critical design can be made.

In this embodiment, since the outer peripheral surface of each of the mount members 10, 30 on which the fibrous material 50 is wound is a cylindrical surface having the same diameter as that of the outer peripheral surface of the inner cylinder 2, when the inner pressure produces tensile force axially acting on the cylinder tube, the tensile force does not act as the force of separating the fibrous material 50 from the outer peripheries of the mount members 10, 30, and therefore the outer cylinder 3 comprising the fibrous material 50 is prevented from separating from the inner cylinder 2.

Since the cylindrical shape of each of the mount members 10, 30 permits the fibrous material 50 to be smoothly changed in its direction in the vicinity of each of the pins 20, 42, the concentration of stress acting on the fibrous material and the load on the pins are relieved. In addition, since the fibrous material 50 can be engaged with the root of each of the pins 20, 42, a sufficient amount of fibrous material 50 can be held by the pins 20, 42. and the bending of each pin can be minimized. As a result, the strength of the cylinder tube can be further improved.

As described above, since the separation of the outer cylinder can be avoided in the fitted portions of the inner cylinder 2 and the mount members 10, 30 so that the strength of the cylinder tube can be improved, the life and reliability of the cylinder tube 1 can be significantly improved.

In addition, the disposition of the O-rings 68, 69 on the rigid body 60 prevents the internal pressure in the cylinder tube 1 from acting on the two pairs of abutting end faces 7, 22 and 8, 23 of the axial end 4 of the inner cylinder 2 and the first portion 11 of the mount member 10 and on a portion of the inner cylinder 2 near the abutting end faces. Similarly, the disposition of the O-ring 44 on the mount member 30 prevents the internal pressure of the cylinder tube 1 from acting on the abutting end faces 9, 36 of the axial end 5 of the inner cylinder 2 and the mount member 30 and on a portion of the inner cylinder 2 which is near the abutting end faces 9, 36.

Because the inner cylinder 2 and the outer cylinder 3 are made of a fiber-reinforced resin material, the rigidity thereof is lower than that of the mount members 10, 30 which are made of a metal. Therefore, when the internal pressure acts on the fitted portion of the inner cylinder 2 and the mount member 10, the portion of the tube axially inward of the axially inner one 8, 23 of the two pairs of abutting end faces 7, 22 and 8, 23 is subjected to elongation larger than the portion of the tube where the mount member 10 is present, so that non-uniform distortion is produced at the boundary between the two portions due to a difference in the elongation therebetween. This non-uniform distortion causes the separation of the outer cylinder 3 when the internal pressure is repeatedly applied to the cylinder tube 1. Similarly, when the internal pressure acts on the fitted portion of the inner cylinder 2 and the mount member 30, the portion of the tube axially inward of the abutting end faces 9, 36 is subjected to elongation larger than the portion of the tube where the mount member 30 is present, so that non-uniform distortion is produced at the boundary between the two portions due to a difference in the elongation therebetween. This causes the separation of the outer cylinder 3.

In this embodiment, as described above, because the disposition of the O-rings 68, 69 and 44 prevents the internal pressure from acting on the fitted portions of the inner cylinder 2 and the mount members 10, 30, no non-uniform distortion occurs at the boundaries therebetween, thereby preventing the separation of the outer cylinder 3. Thus, the life and reliability of the cylinder tube 1 are further improved.

Further, in this embodiment, the recesses 15, 38 are provided behind the pins 20, 42, respectively, so that the fiber wells of the returning portions 51, 52 in which the fibrous material 50 is wound for a predetermined angle are formed in the recesses 15, 38. This enables the fibrous material to be prevented from bulging in the returning portions while enabling the mount members 10, 30 to be stably and securely combined as compared with a case where the fibrous material 50 is wound by the pins 20, 40 only, thereby improving the strength of the cylinder tube.

Some other embodiments of the present invention will be described below with reference to Figs. 7 to 11.

Fig.7 shows an embodiment having a different stepped shape at an axial end of an inner cylinder.

In Fig. 7, a circumferential cut potion 82 is formed in the inner peripheral surface at an axial end 81 of an inner cylinder 80 to form a stepped shape having end faces 83, 84. A first portion 86 of a mount member 85 has a stepped shape which is complementary with the stepped shape of the inner cylinder 80 and which has end faces 87, 88 abutting against the end faces 83, 84, respectively.

In this embodiment, in the first portion 86 of the mount member 85, a portion of the outer peripheral surface ranging from the end face 87 to the vicinity of pins 20 is a cylindrical surface having the same diameter as that of the outer peripheral surface of the inner cylinder 2. This enables the prevention of separation of the outer cylinder 3 and the smooth change in direction of a fibrous material 50. An axially inner O-ring 68 provided on a rigid body 60 elastically contacts with the inner peripheral surface of the inner cylinder 80 at a position axially inward of the axially inner one 84, 88 of the two pairs of abutting end faces 83, 87 and 84, 88 of the inner cylinder 80 and the mount member 85 so as to prevent the internal pressure from acting on the two pairs of abutting end faces 83, 87 and 84, 88 and a portion of the inner cylinder 80 adjacent to the abutting end faces, like the first embodiment. This embodiment therefore has the same effect as that of the first embodiment.

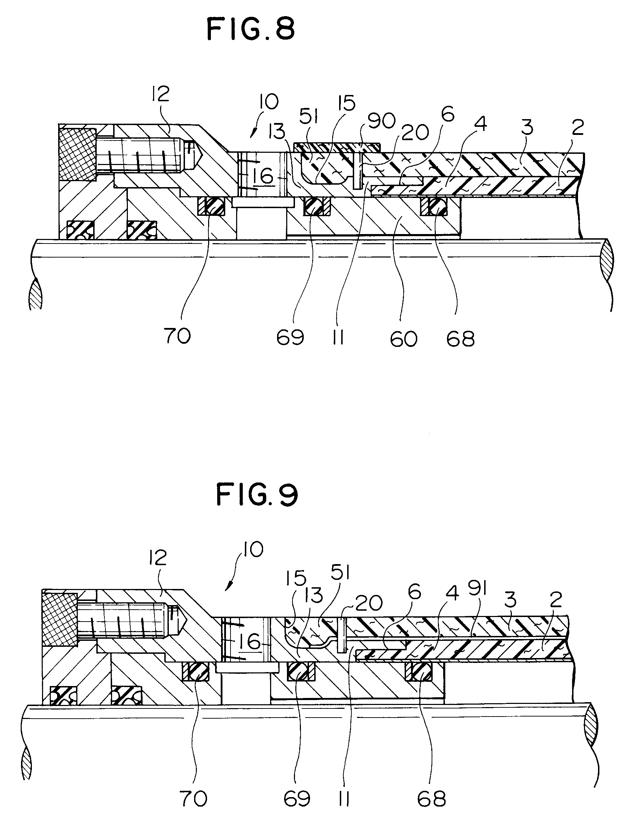

In the embodiment shown in Fig. 8, a reinforcing layer 90 is provided by winding a strand or cloth material of continuous filaments impregnated with a resin on a portion of the outer peripheral surface where the pin 20 and the fiber well 5' are present. This causes uniform dispersion of the load acting on the pins 20 to occur to further increase strength of the cylinder tube.

Fig. 9 shows an embodiment in which a sensor 91 for detecting the stroke of a piston 76 (refer to Fig. 1) is disposed to extend in an axial direction between an inner cylinder 2 and an outer cylinder 3. The sensor 91 comprises a thin long tube containing an amorphous ribbon, a drive coil wound on one end of the thin long tube and a detection coil wound over substantially the entire length of the thin long tube. A magnet is provided on the piston 76 (refer to Fig. 1). When a pulse signal is input to the drive coil, an ultrasonic wave is generated due to the magnetostriction phenomenon of the amorphous ribbon. When the ultrasonic wave is propagated in the thin long tube and passes through a position corresponding to the magnet, an induced electromotive force is generated in the detection coil due to the reverse magnetostriction phenomenon and is output as a detection signal. Since the time between the input pulse signal and the detection signal corresponds to the stroke of the piston, the stroke of the piston can be determined by measuring the time. This is described in detail in JP, A, 63-238415.

In this embodiment, one end of the sensor 91 is passed between the pins 20 and led to a fiber well 51 in a recess 15. The sensor 91 is disposed immediately before winding of the fibrous material 50 on the inner cylinder 2 to form the outer cylinder 3. During this time, since the outer peripheral surface of a mount member 10 is a cylindrical surface having the same diameter as that of the outer peripheral surface of the inner cylinder 2, the sensor 91 can be linearly disposed up to the pins 20 and thus can be easily disposed. In addition, because the sensor is linear, the reliability after assembling is also improved.

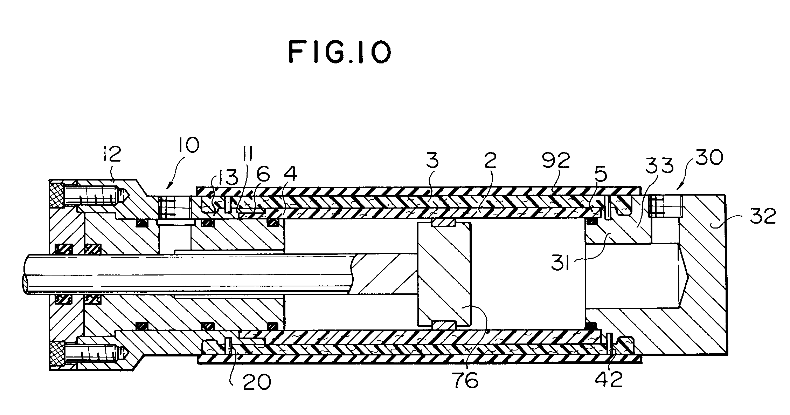

In the embodiment shown in Fig. 10, a protective layer 92 made of an elastic material is further provided on an outer cylinder 3. For example, heat-shrinkable silicone rubber can be used as the elastic material, and a tube-shaped member of the material is inserted onto the outer peripheral surface of the outer cylinder 3 and then heated to form the protective layer 92. The heating of silicone rubber may be effected at the same time as thermosetting of the outer cylinder 3.

The protective layer 92 has the function of protecting the outer cylinder 3 from collision of substances and causing the outer cylinder 3 to adhere to the inner cylinder 2 by heat shrinking so as to strongly combine both the cylinders. In the portions of the pins 20, 42, the protective layer 92 has the function of dispersing the load on the pins 20, which function is the same as that of the reinforcing layer 90 in the embodiment shown in Fig. 8. The protective layer 92 also has the function of preventing the resin in the outer cylinder 3 from decomposing due to ultraviolet rays.

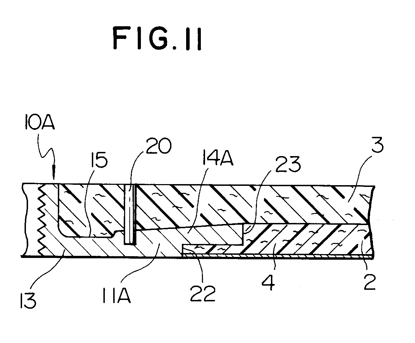

In the embodiment shown in Fig. 11, the outer peripheral surface of a mount member is slightly reversely tapered. A first portion 11A of a mount member 10A has an axial end 14A in a shape complementary with the stepped shape of the axial end 4 of an inner cylinder 2, and the outer peripheral surface of the axial end 14A is reversely tapered in such a manner that the outer diameter is substantially the same as that of the inner cylinder 2 at the end face abutting against the inner cylinder 2 and gradually decreased with an increase in the distance from the abutting end face.

In this embodiment, when tensile force acts on the cylinder tube in the axial direction thereof, the tensile force does not act as the force of separating the fibrous material of the outer cylinder 3 from the outer peripheral surfaces of the mount members 10, 30 and the inner cylinder 2, thereby preventing the outer cylinder 3 from separating from the inner cylinder 2. In addition, since the fibrous material can be smoothly wound on a portion around the pins 20, 42, it is possible to reduce the load on the pins and hold a sufficient amount of fibrous material by each of the pins 20, 42.

In the above-described embodiments, the outer peripheral surface of the mount member has a cylindrical or reverse tapered surface in a portion ranging from the end face abutting against the inner cylinder at least to a position where protrusions are present. However, since the fibrous material wound on the outer peripheral surface has a directional component in the circumferential direction, even if the outer peripheral surface has a regular tapered shape in which the diameter is increased with an increase in the distance from the end face abutting against the inner cylinder, the tensile force acting on the fibrous material does not act as the force of separating the outer cylinder from the mount members and the inner cylinder thereby to make it possible to achieve the initial object, so far as the degree of taper is low. Thus, it should be understood that the present invention include the case where the outer peripheral surface of the mount member is slightly regularly tapered. In this sense, the diameter of the outer peripheral surface may be "substantially" the same as that of the outer peripheral surface of the inner cylinder.

Although, in the above-described embodiments, the pins 20, 42 are used as protrusions for engaging the fibrous material, the protrusions can be provided by other means. For example, two half rings each having a plurality of radial protrusions are prepared, fitted in the annular groove provided in a mount member and then fixed by an adhesive so that the protrusions of the half rings can be used as the protrusions for engaging the fibrous material. Although the protrusions are provided as a member separate from the mount member, the protrusions may be formed integrally with the mount member.

Further, although the inner and outer cylinders are formed by using the filament winding method in the above embodiments, the cylinders may be formed by another method such as a tape winding method, a hand lay-up method or the like. The inner cylinder may be formed of resin material reinforced by short fibers.

Although each of the above embodiments is applied to the cylinder tube of a hydraulic cylinder, the present invention is not limited to this application. For example, the present invention can be applied to other pressure vessels such as the cylinder tube of a pneumatic cylinder, a vessel for liquefied gas, compressed gas and the like.

INDUSTRIAL AVAILABILITY

In the present invention, since the outer peripheral shape of a portion of the mount member adjacent to the inner cylinder, has substantially the same diameter as that of the outer peripheral surface of the inner cylinder, it is possible to prevent the outer cylinder from separating from the inner cylinder when tensile force acts on the fibrous material contained in the outer cylinder, so that a pressure vessel with a long life and high reliability can be provided.

**Claims**

1. A pressure vessel made of a composite material comprising an inner cylinder (2) made of a fiber-reinforced resin material, a rigid mount member (10 or 30) fitted to at least one of the opposite axial ends (4, 5) of said inner cylinder and provided with at least one protrusion (20 or 42), and an outer cylinder (3) formed by winding a fibrous material (50) impregnated with a resin over a region from the outer peripheral surface of said inner cylinder to the outer peripheral surface of said mount member and returning said fibrous material while guiding it by said protrusion, wherein

each of the fitted portions of said axial end (4 or 5) of said inner cylinder (2) and said mount member (10 or 30) has a shape having at least one end face (7, 22, 9, 23 or 9, 36) abutting against one another; and

a portion of the outer peripheral surface of said mount member (10 or 36) which ranges from said abutting end face (23 or 36) at least to a portion where said protrusion (20 or 42) is placed has substantially the same diameter as that of the outer peripheral surface of said inner cylinder (2).

2. A pressure vessel made of a composite material according to Claim 1, wherein sealing means (68, 69 or 44) is provided radially inward of said axial end of the inner cylinder for preventing an internal pressure of said pressure vessel from acting on said abutting end face(7, 22, 8, 23 or 9, 36) and a portion of said inner cylinder adjacent to said abutting end faces.

3. A pressure vessel made of a composite material according to Claim 2, wherein said sealing means comprises an elastic sealing element (68 or 44) arranged to elastically contact with the inner peripheral surface of said inner cylinder (2) at a position axially inward of said abutting end faces (8, 23 or 9, 36) of said axial end (4 or 5) and said mount member (10 or 30), and a rigid body (60 or 31) for supporting said elastic sealing element.

4. A pressure vessel made of a composite material according to Claim 2, wherein said mount member (10 or 30) is formed in a cylindrical shape having an inner peripheral surface having substantially the same diameter as that of the inner peripheral surface of said inner cylinder (2) and is provided with a port (16) for supplying or discharging a working fluid, and said sealing means comprises first and second elastic sealing elements (68, 69) arranged to elastically contact with the inner peripheral surface of said inner cylinder and the inner peripheral surface of said mount member, respectively, at positions on both sides to interpose said abutting end faces (7, 22, 8, 23), and a rigid body (60) supporting said first and second elastic sealing elements and provided with a working fluid passage (63, 64) which communicates with said port of said mount member.

5. A pressure vessel made of a composite material according to Claim 4, wherein said axial end (4) of said inner cylinder (2) has a stepped shape having two abutting end faces (7, 8 or 83, 84) at different axial positions, said first elastic sealing element (68) of said sealing means which contacts with the inner peripheral surface of said inner cylinder is supported by said rigid body (60) at a position axially inward of the axially inner one (8 or 84) of said two abutting end faces.

6. A pressure vessel made of a composite material according to Claim 2, wherein said mount member (3) has a cover-like shape which closes said axial end (5) of said inner cylinder (2) and provided with a port for supplying or discharging a working fluid, and said sealing means comprises an elastic element (44) arranged to elastically contact with the inner peripheral surface of said inner cylinder at a position axially inward of said abutting end faces (9, 36) and a rigid body (31) comprising a part of said mount member (30) for supporting said elastic sealing element.

7. A pressure vessel made of a composite material according to Claim 1, wherein a reinforcing layer 90 formed by circumferentially winding a fibrous material impregnated with a resin is provided on a portion of the outer peripheral surface of said outer cylinder where said protrusion is placed (20 or 42).

8. A pressure vessel made of a composite material according to Claim 1, wherein a sensor is disposed between said inner cylinder (2) and said outer cylinder (3) for detecting the stroke of a piston (76) which axially moves in said inner cylinder.

9. A pressure vessel made of a composite material according to Claim 1, wherein said mount member (10 or 30) has a circumferential recess (15 or 38) formed in the outer peripheral surface at a position axially outward of said protrusion (20 or 42) for containing said fibrous material (50) guided by said protrusion.

10. A pressure vessel made of a composite material according to Claim 1, wherein a protective layer (92) made of an elastic material is further provided on the outside of said outer

cylinder.

# FIG.1

EP 0 464 202 A1

## FIG. 2

## FIG. 3

14

## FIG. 4

## FIG. 5

# FIG.6

# FIG.7

# FIG.8

# FIG.9

FIG.10

# FIG.11

10A
15 20 14A 23 3
13 11A 22 4 2

# INTERNATIONAL SEARCH REPORT

International Application No **PCT/JP90/00088**

**I. CLASSIFICATION OF SUBJECT MATTER** (if several classification symbols apply, Indicate all) *

According to International Patent Classification (IPC) or to both National Classification and IPC

Int. Cl$^5$    B29D22/00, 31/00, B29C67/14, F16J10/00, F16J12/00, F17C1/06, F17C1/16//B29K105:08

**II. FIELDS SEARCHED**

| Minimum Documentation Searched [7] | |
|---|---|
| Classification System | Classification Symbols |
| IPC | B29C67/14, B29D22/00 - 23/22, B29D31/00 F16J10/00 - 12/00, F17C1/00 - 1/16 |

Documentation Searched other than Minimum Documentation
to the Extent that such Documents are Included in the Fields Searched [8]

| | |
|---|---|
| Jitsuyo Shinan Koho | 1926 - 1989 |
| Kokai Jitsuyo Shinan Koho | 1971 - 1989 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 63-166519 (Hitachi Construction Machinery Co., Ltd. and one other), 9 July 1988 (09. 07. 88), Page 1, claim, page 2, lower right column, line 8 to page 3, lower left column, line 1, page 5, upper right column, line 8 to page 5, lower left column, line 1, page 6, upper right column, line 1 to page 7, upper left column, line 8 and Figs. 1, 8, 14, 16 (Family: none) | 1 - 10 |
| A | JP, A, 63-166522 (Hitachi Construction Machinery Co., Ltd. and one other), 9 July 1988 (09. 07. 88), Page 1, claim, page 4, lower right column, line 17 to page 5, upper right column, line 4, page 5, lower left column, line 2 to page 5, lower right column, line 6, page 7, upper right column, line 13 to | 1 - 10 |

**IV. CERTIFICATION**

| Date of the Actual Completion of the International Search | Date of Mailing of this International Search Report |
|---|---|
| April 10, 1990 (10. 04. 90) | April 23, 1990 (23. 04. 90) |
| International Searching Authority | Signature of Authorized Officer |
| Japanese Patent Office | |

**FURTHER INFORMATION CONTINUED FROM THE SECOND SHEET**

| | | |
|---|---|---|
| | lower left column, line 16 and Figs. 5, 8, 16 (Family: none) | |
| A | JP, A, 63-249628 (Hitachi Construction Machinery Co., Ltd. and one other), 17 October 1988 (17. 10. 88), Page 1, claim, page 3, upper left column, line 5, page 4, upper right column, line 1, page 5, lines 6 to 12 and Figs. 1, 6 (Family: none) | 1 - 10 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers .........., because they relate to subject matter not required to be searched by this Authority, namely:

2.☐ Claim numbers .........., because they relate to parts of the international application that do not comply with the prescribed requirements to such an extent that no meaningful international search can be carried out, specifically:

3.☐ Claim numbers .........., because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)